# EUROPÄISCHE PATENTANMELDUNG

(11) **EP 1 602 865 A1**
(43) Veröffentlichungstag der Anmeldung: **07.12.2005**
(21) Anmeldenummer: 04013009.8
(22) Anmeldetag: 02.06.2004
(51) Int. Cl.: F16J 15/34

(54) **Gleitringdichtung mit einem gekühlten Sperrmedium**

(71) Anmelder: Eagle Euroseals GmbH, 21107 Hamburg (DE)
(72) Erfinder: Larsen, Frank, Dipl.-Ing., 21149 Hamburg (DE); Günther, Hans-Werner, Dipl.-Ing., 31623 Drakenburg (DE)
(74) Vertreter: Glawe, Delfs, Moll

(57) **Zusammenfassung**

Eine Gleitringdichtung umfasst ein Dichtungsgehäuse und ein darin enthaltenes Sperrmedium, das über Wärmeaustauschflächen gekühlt ist. Es ist vorgesehen, dass die Wärmeaustauchschflächen (38,39) in oder an dem Dichtungsgehäuse (1) angeordnet sind. Damit wird erreicht, dass der Wärmeaustausch zwischen dem Sperr- und Kühlmedium in die Dichtung integriert ist.

## Beschreibung

Bei hohen Dichtheitsanforderungen werden Gleitringdichtungen verwendet, die doppeltwirkend mit zwei Dichtungen ausgeführt sind, zwischen denen sich ein Sperrmedium befindet, das unter einem Druck gehalten wird, der höher ist als der Druck in dem abzudichtenden Raum (E. Maier: Axiale Gleitringdichtungen. VDI-Verlag 1982, Seite 176). Diese Anordnung stellt sicher, dass kein Medium aus dem abzudichtenden Raum in die Gleitringdichtung gelangen kann. Höchstens kann eine Leckmenge des Sperrmediums in den abzudichtenden Raum oder zu dem umgebenden Raum hin austreten. Das Sperrmedium wird über eine Vor- und eine Rücklaufleitung und einen Sperrmediumsbehälter zirkuliert, der Wärmeaustauschflächen für die Kühlung des Sperrmediums durch ein Kühlmedium enthält. Der Behälter ist an eine Druckquelle angeschlossen und enthält ein Gasvolumen zur Bildung eines Druckspeichers. Dies ist aufwendig. Der Erfindung liegt daher die Aufgabe zugrunde, die Anlage zu vereinfachen.

Erreicht wird dieses Ziel durch die Merkmale des Anspruchs 1, denen zufolge der Wärmeaustausch zwischen dem Sperr- und Kühlmedium in die Dichtung integriert wird. Die Wärmeaustauschflächen sind in oder unmittelbar an dem Dichtungsgehäuse angeordnet. Es kommt darauf an, dass das Dichtungsgehäuse samt den Wärmeaustauschflächen als bauliche Einheit behandelt werden kann. Die bauliche Einheit wird am einfachsten dadurch erreicht, dass die Wärmeaustauschflächen innerhalb des Dichtungsgehäuses angeordnet sind. Jedoch erfasst der Erfindungsgedanke, die Wärmeaustauschflächen mit der Dichtung zu einer baulichen Einheit zusammenzuführen, auch solche Ausführungsformen, bei denen ein Gehäuseteil, das als solches nicht der Aufnahme der Dichtung dient, an das Dichtungsgehäuse derart angeschlossen ist, dass beide eine bauliche Einheit bilden, die in der Regel fabrikmäßig vormontiert werden kann.

Da der Raum in bzw. an dem Dichtungsgehäuse beschränkt ist, strebt man eine raumsparende Anordnung der Wärmeaustauschflächen an, die insbesondere dann gelingt, wenn das Sperrmedium mit beträchtlicher Geschwindigkeit unter günstigen Wärmeübergangsbedingungen daran entlangströmt. Nach einem besonderen Merkmal der Erfindung sind daher in dem Dichtungsgehäuse Einrichtungen zum Erzeugen eines Sperrmediumskreislaufs vorgesehen, beispielsweise eine Pumpe, die das Sperrmedium umwälzen. Dafür ist beispielsweise ein Fördergewinde zwischen einer zur Dichtung gehörigen Wellenschutzhülse und einer im Dichtungsgehäuse vorgesehenen Gegenhülse geeignet.

Diese Bauart hat den Vorteil, dass eine äußere Zirkulation des Sperrmediums mit Rückleitung, Wärmetauscher und Steuereinrichtungen nicht erforderlich ist. Der Sperrmediumsvorrat ist lediglich über eine Speiseleitung mit dem Dichtungsgehäuse verbunden.

Falls das Sperrmedium druckbeaufschlagt sein soll, kann die Speiseleitung mit einer Druckquelle zum Erzeugen des gewünschten Sperrmediumsdrucks im Dichtungsgehäuse verbunden sein. Je nach Lage des Falles kann dafür eine geodätisch hohe Anordnung des Sperrmediumsvorrats genügen oder ein Druckspeicher erforderlich sein.

Die Erzeugung und Aufrechterhaltung des Drucks auf dem Weg über die Sperrmediumszufuhr hat den Vorteil, dass völlige Freiheit hinsichtlich der Gestaltung der Zu- und Abfuhr des Kühlmediums besteht. Statt dessen ist es aber auch möglich, das Kühlmedium zur Erzeugung des Sperrmediumsdrucks im Dichtungsgehäuse heranzuziehen. Das hat den Vorteil, dass keinerlei Druckeinrichtungen in der Sperrmediumszufuhr erforderlich sind. Dies ist insbesondere dann vorteilhaft, wenn das Kühlmedium ohne besonderen Aufwand mit erhöhtem Druck herangeführt wird, wie es beispielsweise bei Entnahme aus einem Versorgungsnetz der Fall ist.

Zum Übertragen des Kühlmediumsdrucks auf das Sperrmedium ist zweckmäßigerweise eine Einrichtung in baulicher Einheit mit oder an dem Dichtungsgehäuse vorgesehen. Sie wird nach einem besonderen Merkmal der Erfindung von einer einerseits vom Sperrmedium und andererseits vom Kühlmedium beaufschlagten, beweglichen Wand gebildet. Dafür kann beispielsweise ein innerhalb eines Zylinders abgedichtet beweglicher Kolben oder ein Balg dienen. Diese bewegliche Wand kann sich auch an der Bildung der Wärmeaustauschflächen beteiligen. Im Interesse einer großen Ausdehnung der Wärmeaustauschflächen kann es zweckmäßig sein, den Kolben oder Balg ringförmig die Dichtung umgebend auszubilden.

Damit die Druckübertragungseinrichtung den Kühlmediumsdruck auf das Sperrmedium übertragen kann, muss der Sperrmediumsraum geschlossen sein. Falls er mit einer von einem Sperrmediumsvorrat kommenden Speiseleitung verbunden ist, sollte diese daher mit einem Rückschlagventil versehen sein, das eine Entspannung des Sperrmediums durch die Speiseleitung verhindert.

Wenn mit Leckverlusten auf der Seite des Sperrmediums zu rechnen ist, nimmt dessen Volumen allmählich ab, was zur Folge hat, dass die bewegliche Wand sich ihrer sperrmediumsseitigen Endlage nähert. In dieser Endlage ist sie nicht mehr zur Druckübertragung fähig, weil die vom Kühlmedium erzeugte Kraft von den die bewegliche Wand in der Endlage abstützenden Strukturteilen aufgenommen wird. Sie muss deshalb von Zeit zu Zeit in eine von der Endlage entfernte Position zurückbewegt werden. Dies kann auf einfache Weise dadurch geschehen, dass von Zeit zu Zeit Sperrmedium gegen den Druck des Kühlmediums nachgespeist wird. Will man den dafür erforderlichen Aufwand vermeiden, so kann dies erfindungsgemäß dadurch geschehen, dass die bewegliche Wand durch eine nachgiebige Kraft, beispielsweise eine Feder, entgegen der vom Kühlmediumsdruck erzeugten Kraft beaufschlagt ist und dass das Kühlmedium von Zeit zu Zeit entspannt wird. Wenn der Kühlmediumsdruck dabei soweit verringert wird, dass die von ihm auf die bewegliche Wand erzeugte Kraft geringer als die Federkraft wird, bewegt sich die Wand zurück in Richtung zum Kühlmedium, wobei gleichzeitig Sperrmedium durch das Rückschlagventil der Speiseleitung nachgesaugt wird. Die Entspannung des Kühlmediums kann einfach dadurch erfolgen, dass dessen Zufuhr kurzzeitig abgesperrt oder gedrosselt wird. Dies kann mit Organen geschehen, die ohnehin in der Anlage vorhanden sein müssen und daher den Aufwand nicht vermehren.

Die Erfindung wird im folgenden näher unter Bezugnahme auf die Zeichnung erläutert, die vorteilhafte Ausführungsbeispiele veranschaulicht. Darin zeigen:

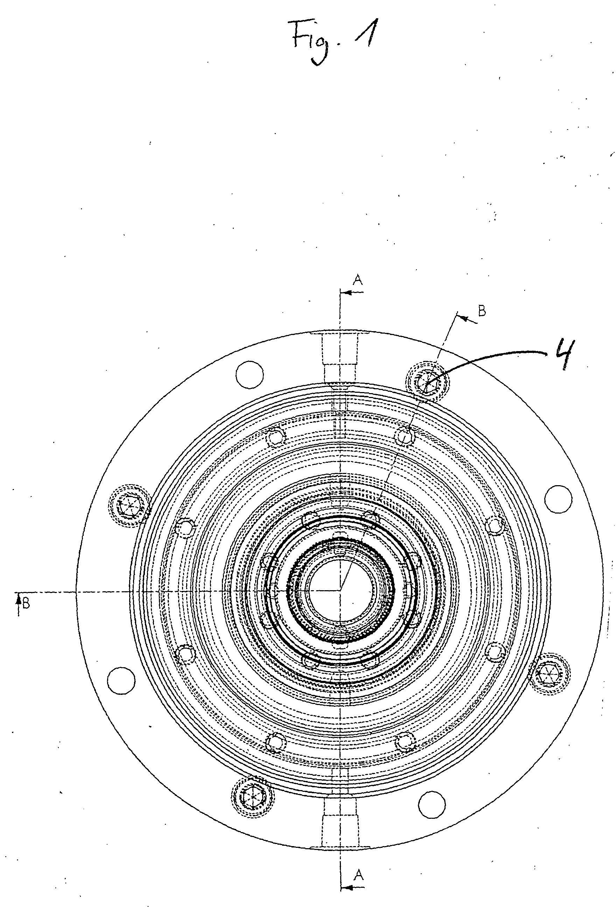

- Fig. 1: die Draufsicht einer erfindungsgemäßen Gleitringdichtung in Axialrichtung;
- Fig. 2: die Schnittdarstellung einer erfindungsgemäßen Gleitringdichtung entlang des Schnitts A-A in Fig. 1;
- Fig. 3: die Schnittdarstellung einer erfindungsgemäßen Gleitringdichtung entlang des Schnitts B-B in Fig. 1;
- Fig. 4: die Schnittdarstellung einer anderen Ausführungsform einer erfindungemäßen Gleitringdichtung entlang des Schnitts A-A in Fig. 1; und
- Fig. 5: die schematische Darstellung einer erfindungsgemäßen Gleitringdichtung mit Versorgungseinrichtungen für Sperrmedium und Kühlmedium.

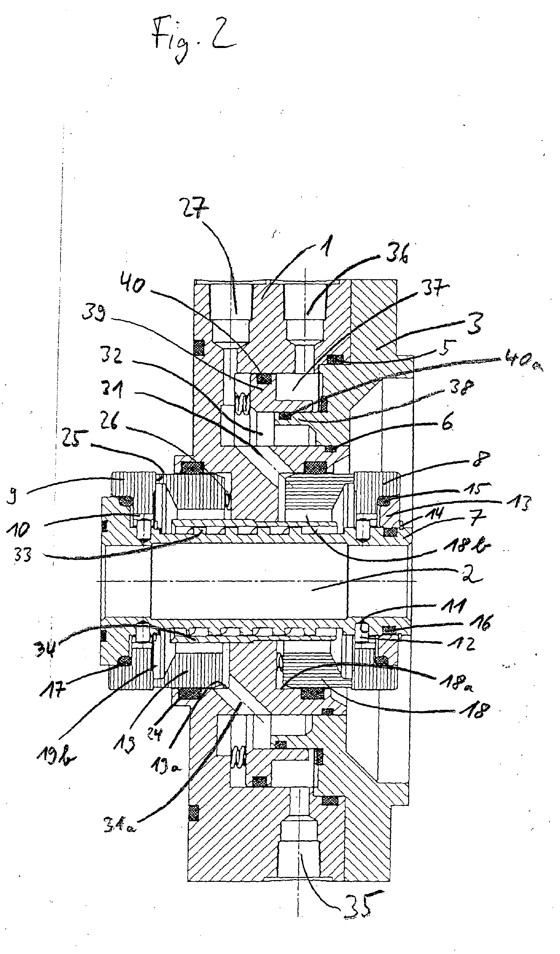

Fig. 2 bis 4 zeigen das ringförmige Dichtungsgehäuse 1 eines Ausführungsbeispiels der erfindungsgemäßen Gleitringdichtung, dessen Innenbohrung eine Welle 2 aufnimmt. Das Dichtungsgehäuse 1 ist in Axialrichtung abgedeckt durch einen ringförmigen Gehäusedeckel 3, der mit Schrauben 4 am Dichtungsgehäuse befestigt ist. Die Dichtflächen zwischen Dichtungsgehäuse 1 und Gehäusedeckel 3 sind durch Dichtringe 5, 6 gedichtet.

Die Welle 2 ist an ihrem Außenumfang kraftschlüssig von einer Wellenschutzhülse 7 umgeben. Auf dem äußeren Umfang der Wellenschutzhülse 7 sitzen die Gegenringe 8, 9. Die Gegenringe 8, 9 sind an ihrem Innendurchmesser mit Nuten 10 versehen. Die Nuten 10 fluchten mit radialen Bohrungen 11 in der Wellenschutzhülse 7. In den Bohrungen 11 sitzende Stifte 12 greifen in die Nuten 10 ein und verhindern ein Verdrehen der Gegenringe 8, 9 gegen die Wellenschutzhülse 7. Ein Verschieben des Gegenrings 9 in Axialrichtung nach außen wird durch einen Bund der Wellenschutzhülse 7 verhindert. Der Gegenring 8 ist durch einen auf der Wellenschutzhülse sitzenden Ring 13, der durch einen Sprengring 14 fixiert ist, gegen ein Verschieben in Axialrichtung nach außen gesichert. Die Dichtflächen zwischen Wellenschutzhülse 7, Ring 13 und den Gegenringen 8, 9 sind durch Dichtringe 15, 16, 17 gedichtet.

In Axialrichtung nach innen von den Gegenringen 8, 9 wird die Wellenschutzhülse 7 von Gleitringen 18, 19 umgeben. Die Gleitringe 18, 19 werden mit ihrem Außenumfang von Bohrungen 18a, 19a des Dichtungsgehäuses 1 aufgenommen, so dass sie gegen das Dichtungsgehäuse in Axialrichtung gleitend beweglich sind. Der in einer Axialbohrung des Dichtungsgehäuses 1 sitzende Stift 22 greift in Nuten 23 der Gleitringe 18, 19 ein und verhindert ein Verdrehen der Gleitringe 18, 19 gegen das Dichtungsgehäuse 1. Die Gleitringe 18, 19 sind durch Dichtringe 24 gegen das Dichtungsgehäuse 1 gedichtet.

In Axialrichtung nach außen liegen die Gleitringe 18, 19 mit ihren Dichtflächen 25 an den Gegenringen 8, 9 an. Federn 26, die in zylindrischen Bohrungen des Dichtungsgehäuses 1 sitzen, beaufschlagen die Gleitringe 18, 19 mit einer Kraft in Axialrichtung gegen die Gegenringe 8, 9.

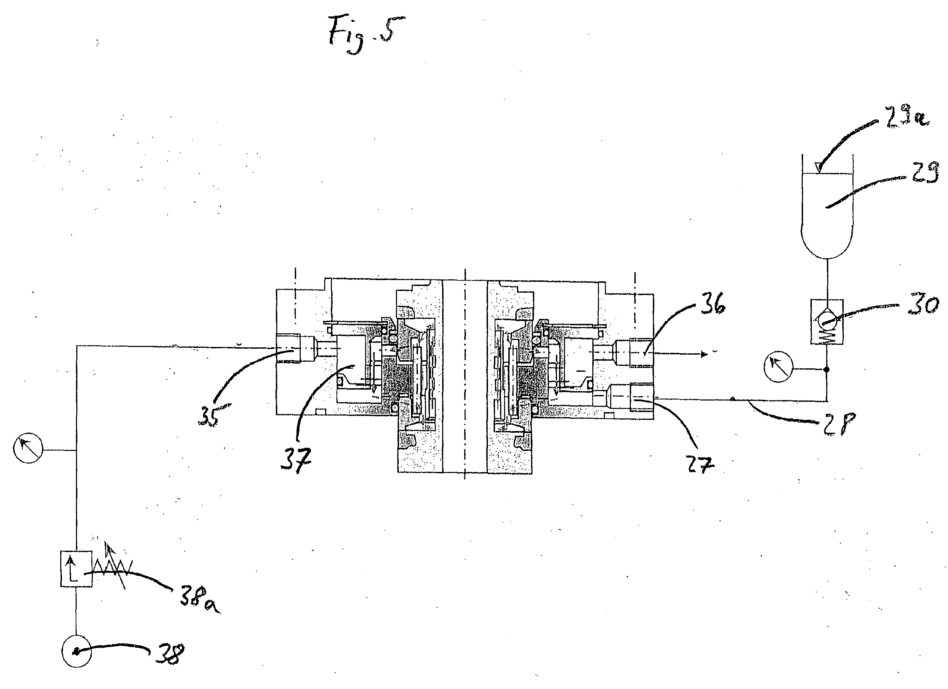

Wie Fig. 5 zeigt, gelangt durch einen Sperrmediumseintritt 27 über eine Speiseleitung 28 Sperrmedium aus einem Sperrmediumsvorrat 29 in das Dichtungsgehäuse 1. Ein Rückschlagventil 30 verhindert, dass in das Dichtungsgehäuse gelangtes Sperrmedium durch die Speiseleitung 28 zurückfließen kann.

Der Sperrmediumseintritt 27 ist mit dem mit der Welle 2 konzentrischen Ringraum 32 verbunden. Über Kanäle 31, 31a steht der Ringraum 32 in Verbindung mit den Hohlräumen 18b, 19b, die in den Bohrungen 18a, 19a von Gleitringen 18, 19, Wellenschutzhülse 7 und Ring 13 gebildet werden. Der Ringraum 32 und die Hohlräume 18b, 19b sind mit Sperrmedium gefüllt.

Am Außenumfang der Wellenschutzhülse 7 befindet sich ein Fördergewinde 33, das von einer in der Innenbohrung des Dichtungsgehäuses 1 sitzenden Gegenhülse 34 umgeben ist. Bei sich drehender Welle 2 bewirkt das Fördergewinde 33 einen Sperrmediumskreislauf innerhalb des Dichtungsgehäuses 1 über die Hohlräume 18b, 19b, die Kanäle 31, 31a und den Ringraum 32.

Aus einer Kühlmediumversorgung 38 über ein Druckbegrenzungsventil 38a gelangt Kühlmedium durch den Kühlmediumseintritt 35 in einen mit der Welle 2 konzentrischen Ringzylinderraum 37 des Dichtungsgehäuses 1. Aus dem Ringzylinderraum 37 verlässt das Sperrmedium das Dichtungsgehäuse 1 wieder über einen Kühlmediumsaustritt 36, Fig. 5. Hinter dem Kühlmediumsaustritt in der Abflussleitung befindet sich ein nicht dargestelltes Druckhalteventil. Über dieses Druckhalteventil und das Druckbegrenzungsventil 38a werden Druck und Durchflussmenge des Kühlmediums eingestellt.

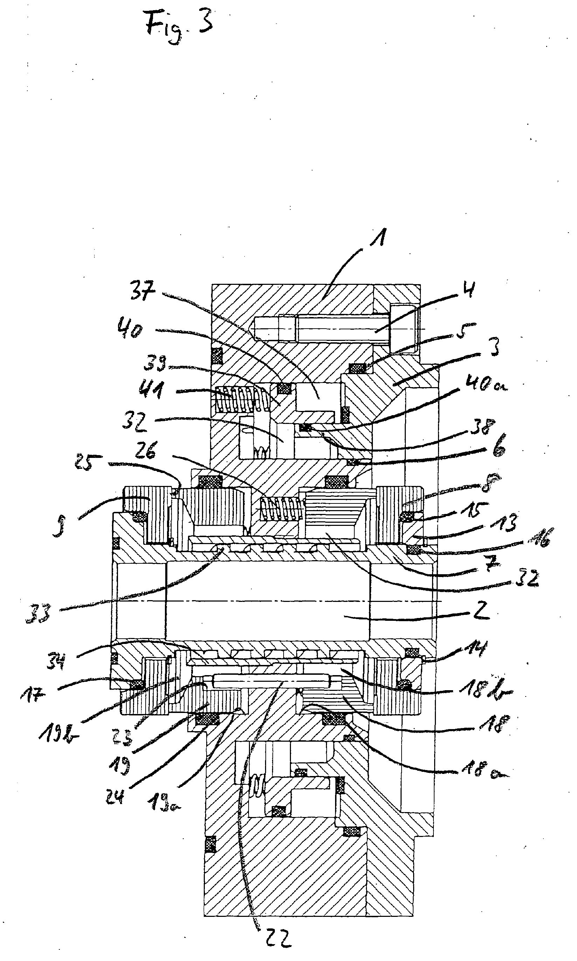

In den Fig. 2 und 3 ist im Ringzylinderraum 37 in Axialrichtung gleitend beweglich ein Ringkolben 39 gelagert, der eine bewegliche Wand zwischen Ringzylinderraum 37 und Ringraum 32 bildet. Der Ringkolben 39 ist über Dichtringe 40, 40a gegen das Dichtungsgehäuse 1 und den Gehäusedeckel 3 gedichtet. Über den Ringkolben 39 überträgt sich der Druck des Kühlmediums auf das Sperrmedium.

Der Ringkolben 39 ist entgegen seiner dem Kühlmediumsdruck folgenden Bewegungsrichtung mit einer Federkraft der Feder 41 beaufschlagt. Wird der Kühlmediumsdruck abgesenkt, so dass die durch den Druck auf Ringkolben 39 ausgeübte Kraft kleiner ist als die Federkraft, wird Ringkolben 39 durch die Feder 41 entgegen dem Kühlmediumsdruck zurückbewegt.

Der mit Kühlmedium gefüllte Ringzylinderraum 37 und der mit Sperrmedium gefüllte Ringraum 32 sind getrennt durch eine dünne vom Gehäusedeckel 3 geformte Zwischenwand 38 sowie den Ringkolben 39. Die Zwischenwand 38 und der Ringkolben 39, die jeweils auf der einen Seite mit dem Kühlmedium und auf der anderen Seite mit dem Sperrmedium in Kontakt stehen, bilden die Wärmeaustauschflächen.

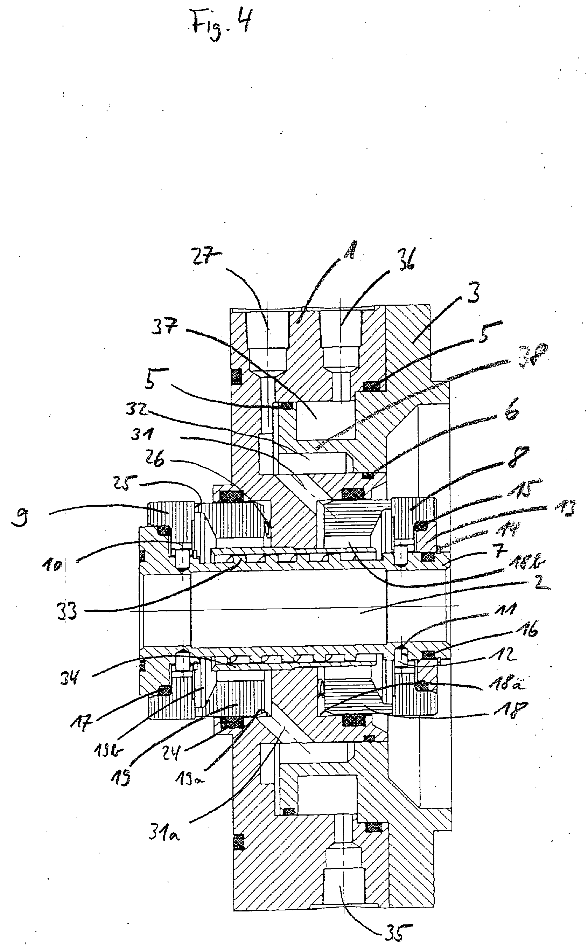

In der alternativen Ausführungsform der Fig. 4 wird der Ringzylinderraum 37 durch eine feststehende Zwischenwand 38, die Bestandteil des Gehäusedeckels 3 ist, von dem Ringraum 32 getrennt. Die Zwischenwand 38, die auf der einen Seite mit dem Kühlmedium und auf der anderen Seite mit dem Sperrmedium in Kontakt steht, bildet die Wärmeaustauschfläche.

Dreht sich die Welle 2 im Dichtgehäuse 1, werden auch die Gegenringe 8, 9 gegen die Gleitringe 18, 19 gedreht. An den Dichtflächen 25 zwischen den Gegenringen 8, 9 und den Gleitringen 18, 19 entsteht Wärme durch Reibung. Die Gleitringe 18, 19 übertragen die Wärme auf das in den Hohlräumen 18b, 19b enthaltene Sperrmedium. Der Sperrmediumskreislauf passiert die Zwischenwand 38 und den Ringkolben 39. Über diese Wärmeaustauschflächen gibt das Sperrmedium die Wärme an das Kühlmedium ab.

Die Gleitringdichtung verhindert ein Austreten von Medium aus dem abzudichtenden Raum dadurch, dass das Sperrmedium innerhalb der Gleitringdichtung unter einem Druck gehalten wird, der höher ist als der Druck in dem abzudichtenden Raum. Der erforderliche Druck wird durch den Ringkolben 39 vom Kühlmedium auf das Sperrmedium übertragen. Das Rückschlagventil 30 verhindert, dass der Druck des Ringkolbens einen Rückfluss des Sperrmediums durch die Speiseleitung bewirkt.

Wenn das Sperrmedium im Betrieb der Gleitringdichtung durch Leckfluss durch die Dichtungsflächen 25 verloren geht, verringert sich das Volumen des im Dichtungsinnenraum vorhandenen Sperrmediums. Unter dem Druck des Kühlmediums wird der Ringkolben 39 aus dem Ringzylinderraum 37 heraus und in den Ringraum 32 hineingedrückt. Diese Verkleinerung des Volumens des Ringraums 32 gleicht den Volumenverlust des Sperrmediums aus.

Der Ringkolben 39 nähert sich durch den Volumenausgleich kontinuierlich seiner sperrmediumsseitigen Endlage an. Von Zeit zu Zeit muss er in eine von der Endlage entfernte Position zurückgeführt werden. Dazu wird das Kühlmedium durch Schließen des Druckbegrenzungsventils 38a soweit entspannt, dass die vom Kühlmediumdruck ausgeübte Kraft auf den Ringkolben 39 kleiner ist als die Kraft der Feder 41. Die Feder 41 drückt den Ringkolben 39 in eine von der sperrmediumsseitigen Endlage entfernte Lage.

Durch die Rückbewegung des Ringkolbens 39 vergrößert sich das Volumen des Ringraum 32 wieder. Diese Volumenvergrößerung wird dadurch ausgeglichen, dass Sperrmedium aus dem Sperrmediumsvorrat 29 durch das Rückschlagventil 30 nachgesaugt wird.

## Patentansprüche

1. Gleitringdichtung mit einem Dichtungsgehäuse, das ein Sperrmedium enthält, das über Wärmeaustauschflächen gekühlt ist, **dadurch gekennzeichnet, dass** die Wärmeaustauschflächen (38, 39) in oder an dem Dichtungsgehäuse (1) angeordnet sind.

2. Gleitringdichtung nach Anspruch 1, **dadurch gekennzeichnet, dass** eine Einrichtung (33) zum Erzeugen eines die Wärmeaustauschflächen (38, 39) passierenden Sperrmediumskreislaufs vorgesehen ist.

3. Gleitringdichtung nach Anspruch 1, **dadurch gekennzeichnet, dass** ein Sperrmediumsvorrat (29) vorgesehen ist, der lediglich über eine Speiseleitung (28) mit dem Dichtungsgehäuse (1) verbunden ist.

4. Gleitringdichtung nach Anspruch 3, **dadurch gekennzeichnet, dass** die Speiseleitung (28) mit einer Druckquelle (29a) zum Erzeugen eines Sperrmediumsdrucks im Dichtungsgehäuse (1) verbunden ist.

5. Gleitringdichtung nach Anspruch 4, **dadurch gekennzeichnet, dass** ein Druckspeicher (29) vorgesehen ist.

6. Gleitringdichtung nach einem der Ansprüche 1 bis 3, **dadurch gekennzeichnet, dass** eine Einrichtung (39) zum Übertragen des Kühlmediumsdrucks auf das Sperrmedium vorgesehen ist.

7. Gleitringdichtung nach Anspruch 6, **dadurch gekennzeichnet, dass** die Einrichtung (39) zum Übertragen des Kühlmediumsdrucks auf das Sperrmedium im Dichtungsgehäuse (1) angeordnet ist.

8. Gleitringdichtung nach Anspruch 7, **dadurch gekennzeichnet, dass** die Einrichtung (39) zum Übertragen des Kühlmediumsdrucks auf das Sperrmedium von einer einerseits vom Sperrmedium und andererseits vom Kühlmedium beaufschlagten beweglichen Wand gebildet ist.

9. Gleitringdichtung nach Anspruch 8, **dadurch gekennzeichnet, dass** die bewegliche Wand (39) von einer nachgiebigen Kraft (41) entgegen der vom Kühlmediumsdruck erzeugten Kraft belastet ist und dass eine Einrichtung (38a) zum Entspannen des Kühlmediumsdrucks vorgesehen ist.

10. Gleitringdichtung nach Anspruch 9, **dadurch gekennzeichnet, dass** die bewegliche Wand (39) ringförmig ausgebildet ist.
